# EUROPEAN PATENT APPLICATION

(11) **EP 4 814 757 A1**
(43) Date of publication of application: **30.09.2026**
(21) Application number: 23959202.5
(22) Date of filing: 23.11.2023
(51) Int. Cl.: G06F 18/214

(54) **METHOD FOR MODEL DATA MANAGEMENT, AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: WU, Hao, Dongguan, Guangdong 523860 (CN)
(74) Representative: Mewburn Ellis LLP
(86) International application number: PCT/CN2023/133596
(87) International publication number: WO 2025/107230

(57) **Abstract**

A method for model data management and a communication device are provided. The method includes the following. A first device sending first information to a second device, where the first information is associated with a database, and model data stored in the database is used for model inference and/or model training. In embodiments of the present disclosure, a database is utilized to store model data for model training and/or model inference, and additionally, the first device may communicate with the second device through the first information associated with the database, which helps to integrate the database and the communication system to realize model training and/or model inference using the model data stored in the database, and to improve accuracy of a model training and/or model inference process of the model in the communication system.

## Description

### TECHNICAL FIELD

The present disclosure relates to the field of communication technology, and more particularly, to a method for model data management and a communication device.

### BACKGROUND

For a model training process of a model, the model performance of the model is usually fixed after model training. However, training data used in model training may become obsolete over time, making the model trained based on the training data unable to adapt to current business requirements, resulting in model performance degradation, or even model failure.

For a model inference process of the model, if the model performs model inference based only on a single input datum, the accuracy of model inference may decrease. For example, in a scenario where a user interacts with a model, the user may pose a series of questions to the model, and these questions are related to each other. In this case, if the model performs model inference for only one of the questions without considering the context of the question, the accuracy of the model inference may decrease. Therefore, model inference based on the question and the context associated with the problem can help improve the accuracy of model inference.

It can be seen from the above description that a large amount of model data (e.g., training data, input data, etc.) needs to be maintained in both the model training process and the model inference process. However, how to maintain such model data is an urgent problem to be solved.

### SUMMARY

The present disclosure provides a method for model data management and a communication device. Various aspects involved in the present disclosure are described below.

In a first aspect, a method for model data management is provided. The method includes the following. A first device sends first information to a second device, where the first information is associated with a database, and model data stored in the database is used for model inference and/or model training.

In a second aspect, a method for model data management is provided. The method includes the following. A second device receives first information sent by a first device, where the first information is associated with a database, and model data stored in the database is used for model inference and/or model training.

In a third aspect, a communication device is provided. The communication device is a first device and includes a sending unit. The sending unit is configured to send first information to a second device, where the first information is associated with a database, and model data stored in the database is used for model inference and/or model training.

In a fourth aspect, a communication device is provided. The communication device is a second device and includes a receiving unit. The receiving unit is configured to receive first information sent by a first device, where the first information is associated with a database, and model data stored in the database is used for model inference and/or model training.

In a fifth aspect, a communication device is provided. The communication device includes a processor, a memory, and a communication interface. The memory is configured to store one or more computer programs, and the processor is configured to invoke the one or more computer programs in the memory to cause the communication device to perform part or all of operations of the method in the first aspect.

In a sixth aspect, embodiments of the present disclosure provide a communication system that includes the first device and/or the second device described above. In another possible design, the system may also include another device that is configured to interact with the first device and/or the second device in a scheme provided by embodiments of the present disclosure.

In a seventh aspect, embodiments of the present disclosure provide a computer-readable storage medium. The computer-readable storage medium is configured to store a computer program, and the computer program is configured to cause a communication device (e.g., a first device and/or a second device) to perform part or all of operations of the methods in the above aspects.

In an eighth aspect, embodiments of the present disclosure provide a computer program product. The computer program product includes a non-transitory computer-readable storage medium storing a computer program, the computer program is operable to cause a communication device (e.g., a first device and/or a second device) to perform part or all of operations of the methods in the above aspects. In some implementations, the computer program product may be a software installation package.

In a ninth aspect, embodiments of the present disclosure provide a chip. The chip includes a memory and a processor, the processor is capable of invoking and running a computer program from the memory to implement part or all operations described in the methods in the above aspects.

In embodiments of the present disclosure, a database is utilized to store model data for model training and/or model inference, and furthermore, the first device may communicate with the second device via first information associated with the database, which helps to integrate the database and the communication system with each other to realize model training and/or model inference using the model data stored in the database, and to improve accuracy of model training and/or model inference process of the model in the communication system.

### BRIEF DESCRIPTION OF THE DRAWINGS

FIG. 1 is a wireless communication system 100 to which embodiments of the present disclosure are applied.
FIG. 2 is a schematic diagram of channel estimation and signal recovery applicable to embodiments of the present disclosure.
FIG. 3 is a schematic diagram of an artificial intelligence (AI) model-based channel-state information (CSI) feedback system applicable to embodiments of the present disclosure.
FIG. 4 illustrates a schematic diagram of an AI model-based positioning scheme applicable to embodiments of the present disclosure.
FIG. 5 illustrates a schematic diagram of an AI model-based beam management applicable to embodiments of the present disclosure.
FIG. 6 is a schematic diagram of a neural network applicable to embodiments of the present disclosure.
FIG. 7 is a schematic diagram of a convolutional neural network (CNN) applicable to embodiments of the present disclosure.
FIG. 8 is a schematic flowchart of a method for model data management according to an embodiment of the present disclosure.
FIG. 9 is a schematic flowchart of a method for model data management according to another embodiment of the present disclosure.
FIG. 10 is a schematic diagram of a communication device of according to an embodiment of the present disclosure.
FIG. 11 is a schematic diagram of a communication device according to an embodiment of the present disclosure.
FIG. 12 is a schematic structural diagram of a communication apparatus according to an embodiment of the present disclosure.

### DETAILED DESCRIPTION

Technical solutions in the present disclosure will be described below with reference to accompanying drawings.

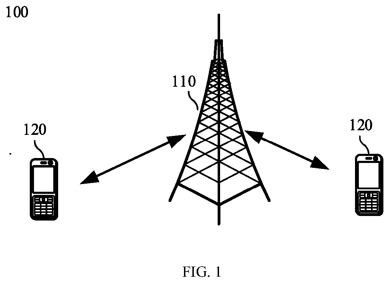

FIG. 1 illustrates a wireless communication system 100 to which embodiments of the present disclosure are applied. The wireless communication system 100 may include a network device 110 and a terminal device 120.The network device 110 may be a device that communicates with the terminal device 120. The network device 110 may provide communication coverage for a specific geographic area and may communicate with the terminal device 120 located within that coverage area.

FIG. 1 exemplarily illustrates one network device and two terminals, optionally, the wireless communication system 100 may include multiple network devices and may include another number of terminal devices within the coverage area of each network device, which is not limited in embodiments of the present disclosure.

Optionally, the wireless communication system 100 may also include other network entities such as a network controller, a mobility management entity, etc., which are not limited in embodiments of the present disclosure.

It can be understood that technical solutions of embodiments of the present disclosure may be applied to various communication systems, such as a 5th generation (5G) system, a new radio (NR) systems, a long term evolution (LTE) system, an LTE frequency division duplex (FDD) system, an LTE time division duplex (TDD) system, etc. The technical solutions provided in the present disclosure can also be applied to future communication systems, such as a sixth generation mobile communication system, a satellite communication system, and so on.

The terminal device in embodiments of the present disclosure may also be referred to as a user equipment (UE), an access terminal, a user unit, a user station, a mobile station, a mobile station (MS), a mobile terminal (MT), a remote station, a remote terminal, a mobile device, a user terminal, a terminal, a wireless communication device, a user agent, or a user device. The terminal device in embodiments of the present disclosure may be a device that provides voice and/or data connectivity to a user, and may be used to connect people, things and machines, such as a hand-held device with a wireless connection function, an in-vehicle device, and the like. The terminal device in embodiments of the present disclosure may be a mobile phone, a tablet computer (Pad), a laptop computer, a palmtop computer, a mobile internet device (MID), a wearable device, a virtual reality (VR) device, an augmented reality (AR) device, a wireless terminal in industrial control, a wireless terminal in self driving, a wireless terminal in remote medical surgery (remote medical surgery), a wireless terminal in a smart grid (smart grid), a wireless terminal in transportation safety (transportation safety), a wireless terminal in a smart city, a wireless terminal in a smart home, etc. Optionally, the UE may be used to act as a base station. For example, the UE may act as a scheduling entity that provides sidelink signals between UEs in vehicle-to-everything (V2X) or device-to-device (D2D), etc. For example, a cellular phone and a car communicate with each other using sidelink signals. A cellular phone communicates with a smart home device without relaying communication signals through a base station.

The network device in embodiments of the present disclosure may be a device for communicating with a terminal device, and the network device may also be referred to as an access network device or a radio access network device, for example, the network device may be a base station. The network device in embodiments of the present disclosure may refer to a radio access network (RAN) node (or device) that accesses a terminal device to a wireless network. The base station may broadly cover various names in the following, or be replaced with the following names, such as: NodeB, evolved NodeB (eNB), next generation NodeB (gNB), relay station, access point, transmitting and receiving point (TRP), transmitting point (TP), master eNB (MeNB), secondary eNB (SeNB), multi-standard radio (MSR) node, home base station, network controller, access node, radio node, access point (AP), transmission node, transceiver node, base band unit (BBU), remote radio unit (RRU), active antenna unit (AAU), remote radio head (RRH), central unit (CU), distributed unit (DU), positioning node, etc. The base station may be a macro base station, a micro base station, a relay node, a donor node or the like, or a combination thereof. The base station may also refer to a communication module, a modem, or a chip disposed in the aforementioned device or apparatus. The base station may also be a mobile switching center and a device undertaking a base station function in D2D, V2X, machine-to-machine (M2M) communication, a network-side device in a 6G network, a device undertaking a base station function in a future communication system, etc. The base station may support networks of the same or different access technologies. A specific technology and specific device form adopted by the network device are not limited in embodiments of the present disclosure.

The base station may be fixed or mobile. For example, a helicopter or a drone may be configured to act as a mobile base station, and one or more cells may move according to the location of the mobile base station. In other examples, a helicopter or a drone may be configured to be used as a device communicating with another base station.

In some deployments, the network device in embodiments of the present disclosure may refer to a CU or a DU, or the network device includes a CU and a DU. The gNB may further include an AAU.

The network device and the terminal device may be deployed on land, including indoor or outdoor, handheld, or vehicle-mounted; deployed on water; and deployed on an aircraft, a balloon, and a satellite in the air. Scenarios where the network device and the terminal device are deployed are not limited in embodiments of the present disclosure.

It can be understood that all or part of functions of the communication device in the present disclosure may also be implemented by software functions running on hardware, or through virtualization functionality instantiated on a platform (e.g., a cloud platform).

### AI Model-Based Channel Estimation and Signal Recovery

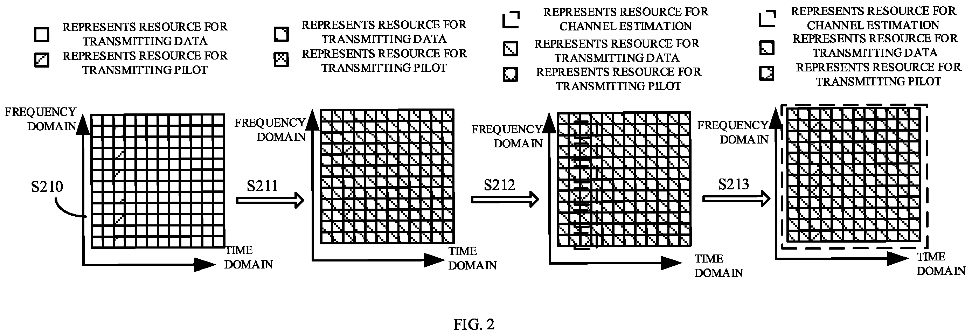

Due to the complexity and time-varying nature of the wireless channel environment, in a wireless communication system (e.g., the wireless communication system described above), a receiver needs to recover a received signal based on a result of channel estimation. FIG. 2 is a schematic diagram of channel estimation and signal recovery applicable to embodiments of the present disclosure.

As illustrated in FIG. 2, in step S210, in addition to transmitting a data signal, a transmitter further transmits a series of pilot signals known to a receiver on time-frequency resources, such as a channel state information-reference signal (CSI-RS), a demodulation reference signal (DMRS), etc.

In step S211, the transmitter transmits the above data signal and pilot signal to the transmitter through a channel.

In step S212, the receiver may perform channel estimation after receiving the pilot signal. In a possible implementation, the receiver may estimate channel information of a channel for transmitting the pilot signal by using a channel estimation algorithm (e.g., least squares method (LS) channel estimation) based on a pre-stored pilot sequence and a received pilot sequence.

In step S213, the receiver may recover channel information on full time-frequency resources by using an interpolation algorithm according to the channel information of the channel for transmitting the pilot sequence, for subsequent CSI feedback or data recovery, etc.

### AI Model-Based CSI Feedback System

In a wireless communication system, a codebook-based scheme is mainly used to implement channel feature extraction and feedback, that is, after a receiver performs channel estimation, a precoding matrix that best matches a current channel is selected from a preset precoding codebook according to a channel estimation result in accordance with a certain optimization criterion, and precoding matrix index (PMI) information is fed back to a transmitter through an air interface feedback link for the transmitter to implement precoding. In some implementations, the receiver may further feed back measured channel quality indication (CQI) to the transmitter for the transmitter to implement adaptive modulation and coding, etc.

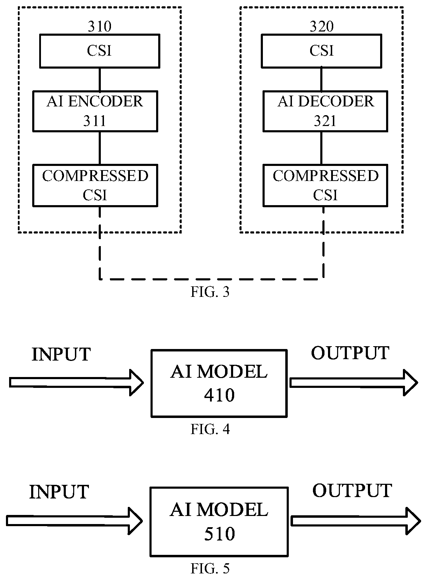

FIG. 3 is a schematic diagram of an AI model-based CSI feedback system applicable to embodiments of the present disclosure. As illustrated in FIG. 3, the entire feedback system includes an AI encoder 311 and an AI decoder 321 of an autoencoder, where the AI encoder 311 is deployed at a transmitter 310, and the AI decoder 321 is deployed at a receiver 320. The transmitter 310 compresses and encodes CSI to be transmitted through the AI encoder 311 to obtain compressed CSI. The compressed CSI is then fed back to the receiver 320 through a feedback link, and the receiver 320 decodes the compressed CSI through the AI decoder 321 to obtain recovered CSI. In this way, communication overhead of feeding back CSI may be reduced without affecting CSI transmission accuracy.

### AI Model-Based Positioning

In cellular wireless positioning, linear propagation of electromagnetic waves between a network device and a terminal device is referred to as line of sight (LOS) wireless propagation. In some cases, electromagnetic wave signals cannot propagate linearly due to blocking by buildings or trees, which is generally referred to as non-line of sight (NLOS) wireless propagation. Traditional positioning algorithms such as time difference of arrival (TDOA), angle-of-arrival (AOA), etc. are all based on an LOS channel, and are no longer applicable in an NLOS-dominated environment. In most scenarios, the number of network devices having an LOS channel with a terminal device is often small, resulting in that the accuracy of the traditional positioning algorithm cannot meet the requirement of high-precision positioning. In addition, some non-ideal factors may exist in an actual system, which will reduce positioning accuracy.

Therefore, AI model-based high-precision positioning in a scenario where LOS/NLOS channels coexist is proposed. Some existing research results show that model training by using a machine learning method based on a large amount of channel data and mining a mapping relationship between a channel response and a position coordinate can solve the problem that the traditional positioning algorithm in unable to be applied in a scenario where LOS/NLOS channels coexist, and improve positioning accuracy.

FIG. 4 illustrates a schematic diagram of an AI model-based localization scheme applicable to embodiments of the present disclosure. Referring to FIG. 4, in a positioning solution that implements positioning in a scenario where LOS/NLOS channels coexist based on an AI model 410, a channel response may be used as an input of the AI model 410, and a position coordinate may be used as an output of the AI model 410. The AI model 410 learns an intrinsic relationship between a wireless channel and a position of a terminal device. In this way, even in a scenario where there are not enough LOS channels and/or a scenario affected by non-ideal conditions, the positioning solution based on the AI model 410 may output a position coordinate of the terminal device with relatively high precision, helping to meet the requirement of high-precision positioning.

Several communication processes to which an AI model is applicable are described above. An AI model applicable to embodiments of the present disclosure is described below. It can be noted that the AI model applicable to embodiments of the present disclosure is not limited to the several AI models described below.

### AI Model-Based Beam Management

In a traditional beam selection process, it is usually necessary to traverse all combinations of receive beams and transmit beams to select an appropriate beam. However, traversing all combinations takes a long time, resulting in low beam selection efficiency.

For example, assume that a network device deploys 64 different downlink transmission directions in FR2 (carried by up to 64 synchronization signal and physical broadcast channel blocks (SSB)). Correspondingly, a terminal device uses one or more antenna panels to simultaneously perform receive beam scanning during reception, and each antenna panel has 4 receive beams. Then the terminal device needs to measure at least 256 beam pairs, that is, downlink resource overhead of 256 resources is required. From a time perspective, each SSB period is about 20 ms, and 4 SSB periods are required to complete measurement of 4 receive beams. Assuming that multiple receive antenna panels can perform beam scanning simultaneously, at least 80 ms is required.

With the increase of the number of beams in a future massive multiple-in multiple-out (MIMO) system, to match an optimal beam pair, using a beam management scheme based on beam scanning will only bring greater reference signal transmission overhead and beam scanning delay. Therefore, to avoid the above problem, AI model-based beam management is proposed in R18. An AI model-based beam management solution is described below with reference to a training process and a prediction process of the AI model respectively.

Assume that the AI model is used to predict an available beam in a beam set A. Correspondingly, in a training phase, beam measurement results of a beam set B may be used as training data of the AI model, that is, the AI model is trained based on the beam measurement results of the beam set B, so that the AI model can predict the available beam from the beam set A.

It can be noted that the beam measurement results of the beam set B may include measurement results corresponding to a layer 1 (L1) measurement quantity, and/or indication information of a selected beam in the beam set B (e.g., a transmit beam identifier, a receive beam identifier, or a beam pair identifier, etc.).

In some implementations, the training data may further include tag information of the beam set A, where the tag information indicates one or more of the following beams in the beam set A: an optimal transmit beam, an optimal receive beam, an optimal beam pair, multiple preferred transmit beams, multiple preferred receive beams, a preferred beam pair, etc.

Referring to FIG. 5, in a prediction phase, an input of the AI model 510 may include a link quality measurement result (e.g., an L1 measurement quantity) corresponding to a beam in the beam set A, and a prediction result output by the AI model 510 may include a target beam selected from the beam set A and link quality corresponding to the target beam.

In some implementations, the target beam may be one or more beams. Taking the target beam as one beam as an example, the target beam may be an optimal beam or a preferred beam in the beam set A. Taking the target beam as multiple beams as an example, the target beam may be multiple beams that meet requirements in the beam set A, where meeting requirements may be understood as that link quality corresponding to a beam meets requirements, e.g., the link quality corresponding to the beam is greater than or equal to a threshold.

In other implementations, the target beam may refer to one or more beam pairs, where each beam pair may include a receive beam or a transmit beam. Taking the target beam as one beam pair as an example, the target beam may be an optimal beam pair or a preferred beam pair in the beam set A. Taking the target beam as multiple beam pairs as an example, the target beam may be multiple beam pairs that meet requirements in the beam set A, where meeting requirements may be understood as that link quality corresponding to a beam pair meets requirements, e.g., the link quality corresponding to the beam pair is greater than or equal to a threshold.

It can be noted that the link quality in embodiments of the present disclosure may be determined by one or more measurement quantities described above. Certainly, the link quality in embodiment of the present disclosure may also be determined based on other measurement quantities in a future communication system, which is not limited in embodiments of the present disclosure.

In addition, that the link quality is determined based on one or more measurement quantities may be understood as that the link quality is obtained after processing one or more measurement quantities. Certainly, the link quality may also be a measurement quantity, which is not limited in embodiments of the present disclosure.

It may further be noted that if the prediction result only indicates one beam in a beam pair, another beam in the beam pair may be determined in other manners, e.g., may be determined through one or some processes of P1 to P3 in a traditional beam selection process, and certainly may also be determined through one or some processes of U1 to U3 in a traditional beam selection process, which is not limited in embodiments of the present disclosure.

In some implementations, the beam set B and the beam set A may be different beam sets. In some implementations, the beam set B may be a subset of the beam set A. Correspondingly, prediction for more beams (beams in the beam set A) may be implemented by measuring fewer beams (beams in the beam set B). Compared with the beam selection scheme based on traversing all combinations described above, it helps to reduce time for performing a beam selection process. Certainly, in embodiments of the present disclosure, the beams in the beam set B and the beams in the beam set A may be completely different beams, e.g., there is no intersection between the beam set B and the beam set A, but a beam direction corresponding to the beam set B may be similar to a beam direction corresponding to the beam set A.

In other implementations, the beam set B and the beam set A may be completely the same beam set.

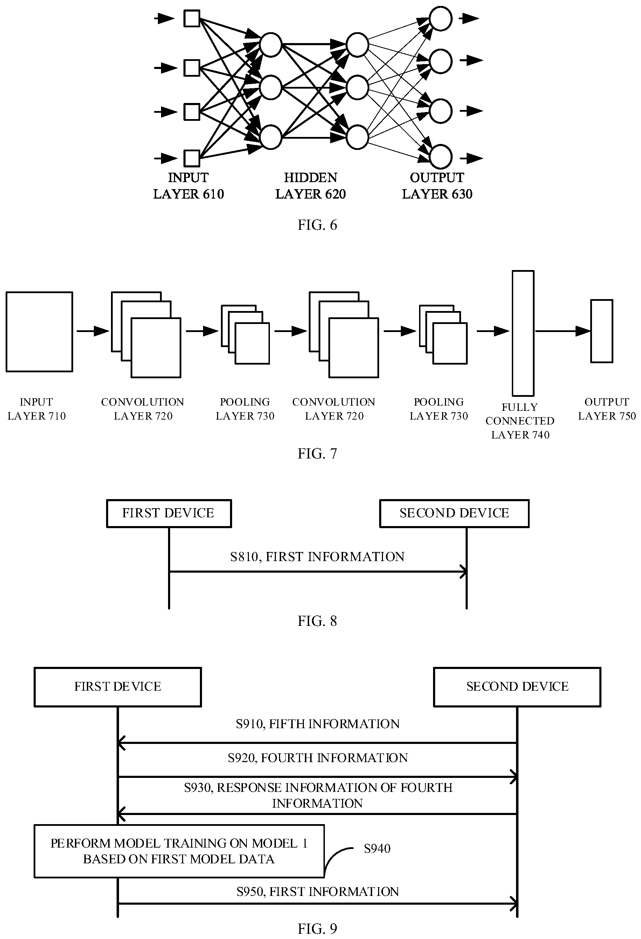

Communication processes to which an AI model is applicable are described above with reference to FIGS. 2 to 5, which are not limited in embodiments of the present disclosure. The AI model may also be applicable to other communication processes specified in a future communication protocol. For example, the AI model may also be used for selection of a target cell in cell handover. For another example, the AI model may also be used for selection of a target cell in a cell reselection process. For another example, the AI model may also be used for predicting communication link failure. For another example, the AI model may also be used for communication link recovery. An AI model applicable to embodiments of the present disclosure is described below with reference to FIGS. 6 to 7.

### AI Model

In recent years, AI research represented by neural networks has achieved great results in many fields, and will also play an important role in people's production and life for a long time in the future. A neural network may be understood as an operation model composed of multiple neuron nodes connected to each other, where a connection between nodes may represent a weighted value from an input signal to an output signal, generally referred to as a weight. Each node performs weighted summation on different input signals and outputs through a specific activation function.

Common neural networks include a convolutional neural network (CNN), a recurrent neural network (RNN), a deep neural network (DNN), etc.

A neural network applicable to embodiments of the present disclosure is described below with reference to FIG. 6. The neural network illustrated in FIG. 6 may be divided into three types according to positions of different layers: an input layer 610, a hidden layer 620, and an output layer 630. Generally speaking, a first layer is the input layer 610, a last layer is the output layer 630, and intermediate layers between the first layer and the last layer are all hidden layers 620.

The input layer 610 is configured to input data, where the input data may be, for example, a received signal received by a receiver. The hidden layer 620 is configured to process the input data, e.g., perform decompression processing on the received signal. The output layer 630 is configured to output processed output data, e.g., output a decompressed signal.

As illustrated in FIG. 6, the neural network includes multiple layers, each layer includes multiple neurons, and neurons between layers may be fully connected or partially connected. For connected neurons, an output of a neuron in a previous layer may be used as an input of a neuron in a next layer.

With the continuous development of neural network research, a neural network deep learning algorithm has been proposed in recent years. More hidden layers are introduced into a neural network to form a DNN. More hidden layers enable the DNN to better describe complex situations in the real world. Theoretically, a model with more parameters has higher complexity and larger "capacity", which means that it can complete more complex learning tasks. Such a neural network model is widely used in pattern recognition, signal processing, optimization combination, anomaly detection and other aspects.

A CNN is a deep neural network with a convolution structure, whose structure is illustrated in FIG. 7, and may include an input layer 710, a convolution layer 720, a pooling layer 730, a fully connected layer 740, and an output layer 750.

Each convolution layer 720 may include multiple convolution operators, also referred to as kernels, whose function may be regarded as a filter for extracting specific information from an input signal. A convolution operator may essentially be a weight matrix, which is usually predefined.

Weight values in these weight matrices need to be obtained through a large amount of training in practical applications. Each weight matrix formed by weight values obtained through training may extract information from an input signal, thereby helping the CNN perform correct prediction.

When the CNN has multiple convolution layers, an initial convolution layer often extracts more general features, which may also be referred to as low-level features; as the depth of the CNN increases, features extracted by later convolution layers become more and more complex.

Pooling layer 730: since it is often necessary to reduce the number of training parameters, a pooling layer is often periodically introduced after a convolution layer. For example, one convolution layer as illustrated in FIG. 7 is followed by one pooling layer, or multiple convolution layers are followed by one or more pooling layers. During signal processing, the only purpose of the pooling layer is to reduce the spatial size of extracted information.

Fully connected layer 740: after processing by the convolution layer 720 and the pooling layer 730, the CNN is still insufficient to output required output information. Because as mentioned above, the convolution layer 720 and the pooling layer 730 only extract features and reduce parameters brought by input data. However, to generate final output information (e.g., a bit stream of original information transmitted by a transmitter), the CNN further needs to use the fully connected layer 740. Generally, the fully connected layer 740 may include multiple hidden layers, and parameters included in the multiple hidden layers may be obtained through pre-training according to relevant training data of a specific task type. For example, the task type may include decoding a data signal received by a receiver, and for another example, the task type may further include performing channel estimation based on a pilot signal received by the receiver.

After the multiple hidden layers in the fully connected layer 740, that is, a last layer of the entire CNN is the output layer 750, configured to output a result. Generally, the output layer 750 is provided with a loss function (e.g., a loss function similar to categorical cross entropy) for calculating a prediction error, or for evaluating a degree of difference between a result output by the CNN model (also referred to as a predicted value) and an ideal result (also referred to as a true value).

To minimize the loss function, the CNN model needs to be trained. In some implementations, a backpropagation algorithm (BP) may be used to train the CNN model. A training process of BP includes a forward propagation process and a back propagation process. During forward propagation (propagation from 710 to 750 in FIG. 7 is forward propagation), input data is input into the above layers of the CNN model, processed layer by layer and transmitted to the output layer. If a result output by the output layer is greatly different from an ideal result, minimization of the loss function is taken as an optimization objective, and back propagation is performed (propagation from 750 to 710 in FIG. 7 is back propagation). A partial derivative of the optimization objective with respect to a weight value of each neuron is calculated layer by layer to form a gradient of the optimization objective with respect to a weight vector, which is used as a basis for modifying a model weight. A training process of the CNN is completed during weight modification. When the above error reaches an expected value, the training process of the CNN ends.

It can be noted that the CNN illustrated in FIG. 7 is only used as an example of a convolutional neural network. In a specific application, the convolutional neural network may also exist in other network model forms, which is not limited in embodiments of the present disclosure.

RNNs are intended to process sequence data. In a traditional neural network model (e.g., a CNN model), from an input layer to a hidden layer and then to an output layer, layers are fully connected, and nodes between layers are unconnected. However, such an ordinary neural network is powerless for many problems. For example, to predict what the next word of a sentence is, previous words are generally needed because words before and after in a sentence are not independent. RNNs are called recurrent neural networks because a current output of a sequence is also related to previous outputs. A specific manifestation is that the network memorizes previous information and applies it to calculation of a current output, that is, nodes between hidden layers are no longer unconnected but connected, and an input of a hidden layer includes not only an output of an input layer but also an output of the hidden layer at a previous moment. Theoretically, RNNs can process sequence data of any length.

Training of an RNN is the same as training of a traditional ANN (Artificial Neural Network). A BP error backpropagation algorithm is also used, with one difference. If RNNs are network-unfolded, parameters W, U, V are shared, while a traditional neural network is not. Moreover, in a gradient descent algorithm, an output of each step depends not only on a network of a current step, but also on states of the network of several previous steps. For example, at t=4, three steps need to be transmitted backward, and various gradients need to be added to the following three steps. This learning algorithm is referred to as back propagation through time (BPTT).

Since there are already artificial neural networks and convolutional neural networks, why do we need recurrent neural networks? The reason is very simple. Whether it is a convolutional neural network or an artificial neural network, their premise assumption is that elements are independent of each other, and inputs and outputs are also independent, such as cats and dogs. However, in the real world, many elements are connected to each other. For example, a stock changes over time. A person says: I like traveling, and my favorite place is Yunnan. I must go to __ when I have the opportunity. Everyone will know that the blank should be filled with "Yunnan". Because we infer it according to the context of the sentence, but it is quite difficult for a machine to do this. Therefore, there is a current recurrent neural network, whose essence is: with a memory capability similar to that of a human. Therefore, its output depends on a current input and memory.

For a model training process of a model, after model training, model performance of the model is usually fixed. However, training data used during model training may gradually become obsolete over time, so that a model trained based on the training data cannot adapt to current service requirements, resulting in degraded model performance or even model failure. This problem is particularly serious for an offline model training scenario. At present, one solution is to use newly collected data as training data to retrain the model (or update the model), so as to improve adaptability between the model and a current environment, or use data matching a current service to perform model training on the model, so as to improve adaptability between the model and the current environment. Such a process of performing model training on the model based on newly collected data (or data matching a current service) is referred to as "online model training". However, such an online model training manner introduces a frequent model training process, resulting in increased model training cost. Especially for a model with a large volume, a cost of one model training may reach tens of millions of dollars, so frequent online model training is unbearable.

For a model inference process of a model, if the model performs model inference only based on single input data, model inference accuracy may be reduced. For example, in a scenario where a user interacts with an AI model, the user may ask a series of questions to the model, and these questions are related. In this case, if the model performs model inference only for one of the questions without paying attention to a context where the question is located (e.g., other questions related to the question), model inference accuracy may be reduced. Therefore, performing model inference based on a question and a context related to the question helps to improve model inference accuracy.

It can be known from the above description that during both a model training process and a model inference process, a large amount of model data (e.g., training data, input data, a context of input data, etc.) need to be maintained. However, how to maintain such model data is an urgent problem to be solved.

In view of the above problem, the applicant proposes that the above model data may be maintained based on a database. In some implementations, the database may be independent of a certain model, or model data of multiple models may be stored in the database. In this way, during model training and/or model inference of multiple models, model data may be obtained from the database. Such a solution that one database can be shared by multiple models helps to reduce model data maintenance cost.

In other implementations, the above model data may be model data used in a model training process and/or model data generated by model training. For example, the model data may include input data used for model training. For another example, the model data may include intermediate data generated during model training. For another example, the model data may include output data output after model training. For another example, the model data may include ideal output data used during model training.

In other implementations, the above model data may be model data used for model inference and/or model data generated by model inference. For example, the model data may include input data used for model inference. For another example, the model data may include intermediate data generated during model inference. For another example, the model data may include output data output after model inference. For another example, the model data may include context data (e.g., user context data) used for model inference. Taking user context data as an example, assuming that the model is used to position user 1, correspondingly, a usual travel route of user 1 may be queried in a database as the user context data, helping to improve positioning accuracy of the model for user 1.

Taking a model for a reference signal receiving power (RSRP) prediction service as an example, model data of the model may include input data and output data, where the input data may be [-121dBm, -130dBm, -97dBm], the output data may include [-99dBm], and correspondingly, the model data may be represented as { [-121dBm, -130dBm, -97dBm]; [-99dBm] }.

In embodiments of the present disclosure, a database may be used to maintain model data, so as to improve accuracy of model training and/or model inference. For example, in a model inference phase, input data of model 1 may be used to query in the database to obtain model data associated with similar input data recorded in the database. The model data associated with the input data may include input data of the model and output data of the model. The model data associated with the similar input data and the input data of model 1 are both input into model 1 together for model inference, helping to improve model inference accuracy.

In some scenarios, the database may record model data used for model training and/or model inference for a long time, helping to improve accuracy of model inference and/or model training. Therefore, the database may also be referred to as a "long-term memory database".

After the database is introduced to record the above model data, model inference and/or model training may be performed based on the model data in the database, helping to improve accuracy of model inference and/or model training. However, how to combine the database with a communication system has become a new problem.

Therefore, in view of the above problem, embodiments of the present disclosure provide a method for model data management. In the method, a first device in a communication system may communicate with a second device through first information associated with a database, helping to combine the database with the communication system to improve accuracy of a model training and/or model inference process in the communication system. FIG. 8 is a schematic flowchart of a method for model data management according to an embodiment of the present disclosure. The method illustrated in FIG. 8 includes operations at S810.

In step S810, the first device sends first information to the second device. In some implementations, the first information is associated with the database, and model data stored in the database is used for inference and/or model training.

In some implementations, the model data may include first model data and/or second model data described below. In embodiments of the present disclosure, the model data may be any data stored in the database described above, and is not repeated here for brevity.

In embodiments of the present disclosure, functions of the first information may be different for different scenarios. The first information in embodiments of the present disclosure is described below with reference to with Embodiment 1 to Embodiment 3.

### Embodiment 1

In some implementations, the first information is used to request to invoke first model data from the database, or in other words, the first information is used to invoke the database to obtain the first model data, where the first model data is used for model inference and/or model training performed by a model.

In some implementations, the first information includes one or more of the following: an index identifier, a model identifier of a model, part or all of input data of the model; usage time of the first model data.

Taking the first information including the index identifier as an example, the index identifier is used to query the first model data in the database.

In some implementations, the index identifier is used to query the first model data matching (or in other words, similar to) the input data of the model, where the first model data matching the input data of the model may be understood as that the input data of the model matches input data in the first model data. That is, the first model data may be queried from the database based on the index identifier, and the input data corresponding to the first model data is similar to the input data of the model.

For example, the first model data includes output data and context data, and the input data corresponding to the first model data is similar to the input data of the model. In this case, during model training performed on the model, the first model data may be obtained from the database, and model inference is performed on the model by combining the first model data and the input data of the model, which helps to improve the accuracy of model training.

In some implementations, the index identifier may be used to identify part of information in the input data of the model, for example, the index identifier may be used to identify a keyword in the input data of the model. In this case, that the input data corresponding to the first model data matches the input data of the model may be understood as that a keyword of the input data corresponding to the first model data matches a keyword of the input data of the model. Certainly, in embodiments of the present disclosure, the index identifier may be used to identify all information in the input data of the model. In this case, that the input data corresponding to the first model data matches the input data of the model may be understood as that all information of the input data corresponding to the first model data matches all information of the input data of the model.

In some scenarios, the foregoing index identifier may be one of multiple index identifiers, and the multiple index identifiers are used to query the first model data from the database. In this case, for the setting of each index identifier, reference may be made to the foregoing introduction, which is not repeated here for brevity.

In some implementations, the foregoing multiple index identifiers may be presented in the form of a list (also referred to as an "index identifier list"). Certainly, the multiple index identifiers may be presented in the form of an index identifier set, which is not limited in embodiments of the present disclosure.

For example, assuming that an index identifier ID is 1, it may identify keyword 1 of the input data of the model, where the keyword 1 corresponds to a column vector 01001. When the index identifier ID is 3, it may identify keyword 2 of the input data of the model, where the keyword 2 corresponds to a column vector 10101. In this case, the first information may carry an index identifier list {1, 3} to identify the first model data corresponding to keyword 1 and keyword 2 to be queried, avoiding large transmission resource occupation caused by carrying {01001, 10101} in the first information.

In embodiments of the present disclosure, carrying the index identifier in the first information to indicate the input data of the model helps to avoid large transmission overhead of the first information caused by transmitting the input data of the model itself. Certainly, in embodiments of the present disclosure, if the foregoing problem is not considered, the input data of the model may be directly carried in the first information.

In addition, in embodiments of the present disclosure, there is no limitation on establishing a correspondence between index identifiers and input data of the model. For example, the foregoing correspondence may be pre-configured by the first device, or the foregoing correspondence may be predefined through a protocol, which helps to reduce transmission resources occupied by transmitting the correspondence. Certainly, if the foregoing problem is not considered, the correspondence may also be configured by a network device.

In embodiments of the present disclosure, there is no limitation on the matching and/or similarity mentioned above. In some implementations, it may include that the input data corresponding to the first model data is exactly the same as the input data of the model. In other implementations, it may include that the difference between the input data corresponding to the first model data and the input data of the model is small. For example, a keyword of the input data corresponding to the first model data is the same as a keyword of the input data of the model.

Taking the first information including a model identifier of the model as an example, in some implementations, the model identifier is used to identify the model, therefore, the model identifier may also be referred to as a "model ID".

As described above, the database usually stores data of multiple models, and data corresponding to different models may be different due to different functions. Therefore, the model identifier of the model may be directly carried in the first information, so as to query the first model data within a range of model data corresponding to the model, that is, narrow a query range of the first model data in the database, which helps to improve the efficiency of querying the first model data.

For example, the database stores first model data of model 1 and first model data of model 2. For model 1 used for beam management, its corresponding model identifier is model identifier 1, and the first model data corresponding to model 1 stored in the database includes location information of a user. For model 2 used for mobility management, its corresponding model identifier is model identifier 2, and the first model data corresponding to model 2 stored in the database also includes location information of the user.

In this case, model identifier 1 may be carried in the first information to indicate that the location information of the user to be obtained is used for model 1, which helps to avoid querying the location information of the user corresponding to model 2 in the database, so as to improve query efficiency. On the other hand, it helps to avoid the possibility of obtaining the location information of the user corresponding to model 2, so as to reduce unnecessary data transmission.

Taking the first information including part or all of input data of the model as an example, in some implementations, the first information may carry all input data of the model, which helps to improve the accuracy of querying the first model data.

For example, the first model data may be obtained based on all input data of the model, where the input data corresponding to the first model data matches all input data of the model, or the input data corresponding to the first model data is similar to all input data of the model. For the matching and/or similarity, reference may be made to the foregoing introduction, which is not repeated here for brevity. In addition, the input data corresponding to the first model data may be all input data or part of input data, which is not limited in embodiments of the present disclosure.

In other implementations, the first information may carry part of input data of the model, which helps to reduce the overhead of transmitting the first information.

For example, the first model data may be obtained based on part of input data of the model, where the input data corresponding to the first model data matches part of the input data of the model, or the input data corresponding to the first model data is similar to part of the input data of the model. For the matching and/or similarity, reference may be made to the foregoing introduction, which is not repeated here for brevity. In addition, the input data corresponding to the first model data may be all input data or part of input data, which is not limited in embodiments of the present disclosure.

Assuming that all input data of the model includes a complete precoding matrix, to reduce the transmission overhead of the input data, a sparse precoding matrix corresponding to the precoding matrix may be transmitted as part of the input data, where the sparse precoding matrix may be obtained from the complete precoding matrix through matrix transformation. Carrying the sparse precoding matrix in the first information helps to reduce the amount of data to be transmitted over the air interface, so as to reduce the overhead of transmitting the first information.

Taking the first information including usage time of the first model data as an example, the usage time of the first model data may be the time when the model uses the first model data. Assuming that the first model data is used for model training of the model, the usage time may be the time when the model performs model training. Assuming that the first model data is used for model inference of the model, the usage time may be the time when the model performs model inference.

In embodiments of the present disclosure, there is no limitation on the usage time. For example, the usage time may be used to indicate the latest time for using the first model data, or in other words, the usage time may be used to indicate the deadline for obtaining the first model data. Correspondingly, the second device may refer to the usage time when sending the first model data. If the first model data has not been sent by the latest time, even if the first model data is successfully sent subsequently, the model can no longer perform model training and/or model inference based on the first model data. Therefore, in this case, the first model data may not be sent anymore, so as to avoid unnecessary model data transmission. For another example, the time for using the first model data may be a time before the actual time of using the first model data, so that the first model data can be sent in advance, to reduce the failure of model training and/or model inference caused by the failure of timely transmission of the first model data.

In embodiments of the present disclosure, there is no limitation on the implementation of the foregoing usage time. In some implementations, the usage time of the first model data may be regarded as a time threshold. Correspondingly, if the time threshold is exceeded, the transmission of the first model data may be omitted, so as to avoid unnecessary data transmission. If the time threshold is not exceeded, transmission of the first model data may be attempted.

In other implementations, the usage time may be maintained through a timer. Correspondingly, during the running period of the timer, transmission of the first model data may be attempted. If the timer expires, transmission of the first model data may be stopped. The start of the timer may be determined based on the transmission of the first information. For example, the start time of the timer may be the sending time of the first information. For another example, there may be a time interval between the start time of the timer and the sending time of the first information.

It can be noted that the first information in embodiments of the present disclosure is described above. In some implementations, the foregoing pieces of first information may be used independently to reduce the overhead of transmitting the first information. In other implementations, the foregoing pieces of first information may be used in combination with each other to improve the efficiency of querying the first model data. For example, the first information may include an index identifier and a model identifier of the model, so as to query the first model data by using the index identifier in a data set corresponding to the model, to improve the efficiency of querying the first model data. For another example, the first information may include part of input data of the model and a model identifier of the model, so as to query the first model data by using part of the input data in a data set corresponding to the model, to improve the efficiency of querying the first model data. For example, the first information may include all input data of the model and a model identifier of the model, so as to query the first model data by using all the input data in a data set corresponding to the model, to improve the efficiency of querying the first model data.

In addition, in embodiments of the present disclosure, there is no limitation on a trigger mode of the first information. The trigger mode of the first information may be the same as a trigger mode of the fourth information described below. For details, reference may be made to the trigger mode of the fourth information in Embodiment 3, that is, the fourth information in the following may be replaced with the first information, which is not repeated here for brevity.

In some implementations, if the second device receives the first information, the second device may indicate whether the first model data is found in the database through response information of the first information. That is, the method further includes the following. The second device sends response information of the first information to the first device, where the response information indicates whether the first model data is searched out in the database.

In some implementations, if the first model data is searched out in the database, the first model data may be carried in the response information. It can be noted that if the first model data is searched out in the database, the response information may indirectly indicate that the first model data is searched out in the database by carrying the first model data, so as to reduce the overhead of transmitting the response information. Certainly, if the foregoing problem is not considered, the first model data and the information indicating that the first model data is searched out in the database may be carried in the response information as mutually independent information.

In other implementations, if the first model data cannot be transmitted, it may be indicated through the response information. In some scenarios, if the first model data is not searched out in the database, it may be indicated through the response information that the first model data is not searched out in the database. For example, the response information indicating that the first model data is not searched out in the database may occupy 1 bit, so as to reduce the overhead of transmitting the response information. For another example, the response information of the first information may be a NACK (that usually occupies 1 bit), so as to reduce the overhead of transmitting the response information. For another example, the response information of the first information may be empty, to indicate that the first model data is not searched out in the database.

In other scenarios, the first information may indicate the usage time of the first model data. In this case, if the transmission time of the first model data is later than the usage time indicated by the first information, the second device may indicate that the first model data is unable to be transmitted through the response information, or in other words, indicate that the first model data will not be transmitted any more through the response information. For example, the response information may occupy 1 bit to indicate that the first model data cannot be transmitted, so as to reduce the overhead of transmitting the response information. For another example, the response information of the first information may be a NACK to indicate that the first model data is unable to be transmitted, so as to reduce the overhead of transmitting the response information. For another example, the response information of the first information may be empty to indicate that the first model data is unable to be transmitted, so as to reduce the overhead of transmitting the response information.

For example, model 1 is used for model inference based on RSRP, and all input data 1 of model 1 is [-120dBm, -130dBm, -97dBm]. The first device may send first information to the second device, where the first information carries the input data 1. Correspondingly, the second device may search out matched input data 2: [-121dBm, -130dBm, -97dBm] based on the input data 1, and output data corresponding to the input data 2 is [-99dBm]. In this case, the second device may use {input data 2, output data} as the first model data, and send the first model data to the first device through response information of the first information.

### Embodiment 2

In some implementations, the first information is used to request to update first model data in a database to second model data.

In some implementations, both the first model data and the second model data are used for model inference and/or model training performed by the model. It can be understood that the second model data has a similar meaning to the first model data, and for details, reference may be made to the foregoing introduction about model data, which is not repeated here for brevity.

For example, if new output data (i.e., the second model data) is obtained after model inference is performed on the model based on the first model data, the first model data in the database may be updated to the second model data through the first information, where the second model data includes the new output data.

For another example, the first model data includes input data and output data. If a new model is obtained after model training is performed on the model based on the first model data, and new output data is obtained after the first model data is input into the new model, the new output data is the output data in the second model data, and the input data in the second model data is the input data in the first model data. In this case, the first model data in the database may be updated to the second model data through the first information, where the second model data includes the new output data.

In some implementations, after the first model data is updated to the second model data, the database may continue to store the first model data, so as to improve the diversity of data stored in the database and help to improve the accuracy of model training and/or model inference. Certainly, in embodiments of the present disclosure, after the first model data is updated to the second model data, the database may no longer store the first model data, or in other words, the database may delete the first model data, so as to save the storage space of the database.

In some implementations, the second model data is one (piece) of multiple (pieces of) model data, and the multiple of model data may be used for model inference and/or model training performed on the model.

In embodiments of the present disclosure, there is no limitation on the multiple model data. In some implementations, the multiple model data may be obtained by the first device performing multiple times of model inference by using a model (also referred to as a "first model"), or in other words, the multiple model data may be obtained by the first device performing multiple times of model inference by using one model. In other implementations, the multiple model data may be obtained by the first device performing model inference based on multiple models respectively, where the multiple models are different models in the first device.

In some implementations, triggering of update of the first model data (or update of the database) includes one or more of the following: periodic triggering, event-based, triggering, triggering based on a model inference process, triggering based on a model training process, and triggering based on third information.

For example, the update of the first model data is triggered periodically, that is, within a period, if update time of the first model data is not reached, the first device may first cache the second model data, and when the update time of the first model data is reached, update the first model data to the second model data by sending the first information.

In embodiments of the present disclosure, there is no limitation on the period for updating the first model data. For example, the period may be determined based on one or more of the following manners: pre-configuration, pre-definition, and configuration by a network device.

For example, the update of the first model data is triggered based on an event, in some implementations, the event may be associated with the size of available storage space of the first device, where the available storage space includes storage space available for storing model data. For example, the event may include that remaining storage space of the first device available for storing model data is less than a first threshold. For another example, the event may include that storage space occupied by storing model data in the first device is greater than a third threshold.

Certainly, in embodiments of the present disclosure, the available storage space may be overall available storage space of the first device (for example, including storage space for model data of the first model and storage space for model data of other models). In this case, the event may include, for example, that the remaining available storage space is less than a threshold 1, or the event may include, for example, that used storage space in the available storage space is greater than a threshold 2.

In embodiments of the present disclosure, the foregoing thresholds (one or more of the first threshold, the third threshold, the threshold 1, and the threshold 2) may be determined based on one or more of the following manners: pre-configuration, pre-definition, and configuration by a network device.

In addition, the foregoing model data may include first model data and/or second model data. Certainly, in embodiments of the present disclosure, the foregoing model data may further include model data of other models in addition to the model data of the model mentioned above, which is not limited in embodiments of the present disclosure.

In embodiments of the present disclosure, if the foregoing event occurs, it may indicate that the available storage space in the first device is insufficient or will be insufficient soon. In this case, the second model data may be stored in the database by updating the first model data, and correspondingly, the first device may no longer store the second model data, which helps to reduce the used storage space in the first device.

In other implementations, the foregoing event may be associated with a data volume of model data stored in the first device. For example, the event may include that the data volume of the model data stored in the first device is greater than a second threshold.

In embodiments of the present disclosure, the foregoing model data may include model data of the foregoing model, for example, first model data and/or second model data. Certainly, in embodiments of the present disclosure, the foregoing model data may further include model data of other models in addition to the model data of the model mentioned above, which is not limited in embodiments of the present disclosure.

In addition, in embodiments of the present disclosure, the second threshold may be determined based on one or more of the following manners: pre-configuration, pre-definition, and configuration by a network device.

In embodiments of the present disclosure, if the foregoing event occurs, it may indicate that the available storage space in the first device is insufficient or will be insufficient soon. In this case, the second model data may be stored in the database by updating the first model data, and correspondingly, the first device may no longer store the second model data, which helps to reduce the used storage space in the first device.

For example, the update of the first model data is triggered based on a model inference process, where the model inference process may be understood as a model inference process based on the first model data. That is, after the second model data is obtained by each model inference, the update of the first model data may be triggered, that is, the first model data is updated to the second model data. In this case, it may be understood that the update of the first model data is real-time.

For example, the update of the first model data being triggered based on a model training process, where the model training process may be understood as a model training process based on the first model data. That is, after the second model data is obtained by each model training, the update of the first model data may be triggered, that is, the first model data is updated to the second model data. In this case, it may be understood that the update of the first model data is real-time.

For example, the update of the first model data is triggered based on third information, in some implementations, the third information is used to request the first device to perform model training based on the first model data, so as to update the first model data. The third information may be sent by the second device, that is, the update of the first model data may be requested by the second device.

In embodiments of the present disclosure, there is no limitation on the trigger mode of the third information. For example, if the second device detects that the first model data has not been updated for a long period of time, the second device may request the update through the third information. For another example, if the second device detects that the performance of the model trained based on the first model data is degraded, the second device may request the update through the third information.

In some implementations, the first model data may be stored in the database by the first device. For example, after model training and/or model inference, the first device may send the first model data to the second device to instruct the second device to store the first model data in the database. Certainly, in embodiments of the present disclosure, the first model data may also be stored in other manners, which is not limited in embodiments of the present disclosure.

It can be noted that the foregoing information for storing the first model data may be used in combination with the first information, or the foregoing information for storing the first model data may be used independently, which is not limited in embodiments of the present disclosure. In addition, in embodiments of the present disclosure, the first model data may include one or more groups of model data, and each group of model data may include input data and/or output data.

### Embodiment 3

In some implementations, if the first model data stored in the database is used for model training, step S810 may include the following. In response to the model training being completed (or in other words, the model training being completed based on the first model data), the first device sends the first information to the second device, where the first information indicates to delete the first model data, or in other words, the first information indicates releasing the first model data.

In some implementations, deleting the first model data may be replaced with deleting the first model data from the database, or releasing the first model data may be replaced with releasing the first model data in the database.

In some implementations, the method further includes the following. The second device may send response information for the first information to the first device, where the response information indicates whether the first model data is released.

In some implementations, if the first model data is not released or is not successfully released, it may be indicated through the response information that the first model data is not released or is not successfully released. For example, the information indicating that the first model data is not released or is not successfully released may occupy 1 bit to indicate that the first model data is not released or is not successfully released, so as to reduce the overhead of transmitting the response information. For another example, the response information of the first information may be a NACK (that usually occupies 1 bit) to indicate that the first model data is not released or is not successfully released, so as to reduce the overhead of transmitting the response information. For another example, the response information of the first information may be empty to indicate that the first model data is not released or is not successfully released.

In other implementations, if the first model data is released, it may be indicated through the response information that the first model data is released. For example, the information indicating that the first model data is released may occupy 1 bit, so as to reduce the overhead of transmitting the response information. For another example, the response information of the first information may be an ACK (that usually occupies 1 bit), so as to reduce the overhead of transmitting the response information.

In some implementations, before operations at S810, the method further includes the following. The first device sends fourth information to the second device, where the fourth information is used to request the first model data in the database. In this case, the fourth information may be understood as the first information described in Embodiment 1 applicable to a model training process. Certainly, in embodiments of the present disclosure, the fourth information may also be information completely different from the first information in Embodiment 1.

In some implementations, triggering of transmission of the fourth information includes one of the following: periodic triggering; event-based triggering; trigger based on fifth information.

For example, the transmission of the fourth information is triggered periodically, that is, the first device may periodically send the fourth information to the second device to request the first model data.

In some implementations, it may be understood that the process of model training performed on the model based on the first model data may be periodic, which helps to improve the performance of the model.

In embodiments of the present disclosure, there is no limitation on the foregoing period. For example, the period may be determined based on one or more of the following manners: pre-configuration, pre-definition, and configuration by a network device.

For example, the transmission of the fourth information is triggered based on an event, in some implementations, the event may include that model training has not been performed on the model within a period of time. In other implementations, the event may include degradation of model performance of the model. Certainly, the event may also be other events pre-configured by the manufacturer of the first device, which is not limited in embodiments of the present disclosure.

For example, the transmission of the fourth information is triggered based on the fifth information, the fifth information indicates that the first device is to obtain the first model data. In some implementations, the fifth information indicates that the first device is to obtain the first model data by indicating the first device is to perform model training based on the first model data.

In some implementations, the fifth information is triggered based on an event. In some implementations, the event may be associated with the size of available storage space of the database, where the available storage space includes storage space available for storing model data. For example, the event may include that the remaining storage space of the database available for storing model data is less than a threshold. For another example, the event may include that storage space occupied by storing model data in the database is greater than a threshold.

In embodiments of the present disclosure, the threshold may be determined based on one or more of the following manners: pre-configuration, pre-definition, and configuration by a network device.

In embodiments of the present disclosure, if the event occurs, it may indicate that the available storage space in the database is insufficient or will be insufficient soon. In this case, the first device may be requested to obtain the first model data through the fifth information. Correspondingly, the first device may send the fourth information to request the first model data, and then the first device may perform model training on the model based on the first model data. If the model training is completed, the database may no longer store the first model data, which helps to reduce the used storage space in the database.

In other implementations, the event may be associated with a data volume of model data stored in the database. For example, the event may include that the data volume of the model data stored in the database is greater than a threshold.

In embodiments of the present disclosure, the foregoing model data may include model data of the foregoing model, for example, the first model data. Certainly, in embodiments of the present disclosure, the foregoing model data may further include model data of other models in addition to the model data of the model mentioned above, which is not limited in embodiments of the present disclosure.

In addition, in embodiments of the present disclosure, the foregoing threshold may be determined based on one or more of the following manners: pre-configuration, pre-definition, and configuration by a network device.

In embodiments of the present disclosure, if the foregoing event occurs, it may indicate that the available storage space in the database is insufficient or will be insufficient soon. In this case, the first device may be requested to obtain the first model data through the fifth information. Correspondingly, the first device may send the fourth information to request the first model data, and then the first device may perform model training on the model based on the first model data. If the model training is completed, the database may no longer store the first model data, which helps to reduce the used storage space in the database.

For ease of understanding, the method for model data management according to the embodiment of the present disclosure is described below with reference to FIG. 9. The method illustrated in FIG. 9 includes step S910 to step S950. It is assumed that model 1 for model inference based on RSRP is deployed in the first device, and a database is deployed in the second device.

In step S910, the second device sends fifth information to the first device to instruct the first device to obtain first model data.

In some implementations, for the trigger mode of the fifth information, reference may be made to the foregoing introduction.

In step S920, in response to the fifth information, the first device sends fourth information to the second device to request the first model data in the database.

In step S930, in response to the fourth information, the second device sends response information of the fourth information to the first device, where the response information of the fourth information may include the first model data.

In step S940, the first device performs model training on model 1 based on the first model data.

In step S950, in response to the end of model training, the first device sends first information to the second device to instruct the second device to delete the first model data from the database.

The method for deleting the first model data in embodiments of the present disclosure is described above in conjunction with Embodiment 3. In other scenarios, when the second device instructs the first device to obtain the first model data, the first device may be temporarily unable to use the first model data to perform model training on the model. In this case, the first device may indicate to the second device that obtaining of the first model data from the database is refused.

In embodiments of the present disclosure, the foregoing solution of refusing to obtain the first model data may be used as another case of Embodiment 3, that is, when the second device instructs the first device to obtain the first model data through the fifth information, the first device may be temporarily unable to use the first model data to perform model training on the model. In this case, the first device may send response information of the fifth information to the second device to indicate refusal to obtain the first model data. Certainly, in embodiments of the present disclosure, the foregoing solution of refusing to obtain the first model data may be used independently, that is, when the second device instructs the first device to obtain the first model data through sixth information, the first device may be temporarily unable to use the first model data to perform model training on the model. In this case, the first device may send first information to the second device to indicate refusal to obtain the first model data.

In embodiments of the present disclosure, there is no limitation on the foregoing information indicating refusal to obtain the first model data. For example, the information may occupy 1 bit to indicate that the first device refuses to obtain the first model data, so as to reduce the overhead of transmitting the response information. For another example, the information may be a NACK (that usually occupies 1 bit) to indicate that the first device refuses to obtain the first model data, so as to reduce the overhead of transmitting the response information.

In some implementations, if the first device refuses to obtain the first model data, the second device may independently manage the database. For example, the second device releases part of the model data in the database in a manner such as first in first out (FIFO). For another example, the second device may randomly release part of the model data in the database. For another example, the second device may no longer store new model data. This is not limited in embodiments of the present disclosure.

In some implementations, the first device may be a device deployed with a model, or the first device may be a device that needs to perform model inference and/or model training on the model. In other implementations, the second device may be a device deployed with a database, or the second device may be a device that accesses (e.g., updates) the database. In embodiments of the present disclosure, there is no specific limitation on the device types of the first device and/or the second device, which will be described in detail below and not repeated here for brevity.

In embodiments of the present disclosure, the solutions of the foregoing Embodiment 1 to Embodiment 3 may be used independently. Alternatively, the solutions of the foregoing Embodiment 1 to Embodiment 3 may be used in combination with each other, which is not limited in embodiments of the present disclosure.

In embodiments of the present disclosure, the first device and the second device may be different devices, or the first device and the second device may be the same device, which is not limited in embodiments of the present disclosure.

In embodiments of the present disclosure, there is no limitation on the first device and/or the second device. For example, the first device is a terminal device, and the second device is a network device. For another example, the first device is a network device, and the second device is a terminal device. For another example, the first device is a first terminal device, and the second device is a second terminal device. For another example, the first device is a first network device, and the second device is a second network device.

In embodiments of the present disclosure, if the second device is a terminal device, the database may be deployed in the terminal device. Generally, most measurement information is directly obtained by the terminal device. Therefore, deploying the database in the terminal device helps to avoid frequent transmission of a large amount of model data.

In embodiments of the present disclosure, if the second device is a network device, the database may be deployed in the network device. Generally, a network device may provide services for multiple terminal devices. Therefore, model data corresponding to the multiple terminal devices may be stored in the database, which helps to improve the diversity of model data in the database, so as to improve the accuracy of model training and/or model inference.

The foregoing network device is an access network device, a core network device, an AI/ML model-related information management device, or an operation administration and maintenance (OAM) device. Exemplarily, the access network device is any one of the following: gNB, CU, DU, centralized unit-control plane (CU-CP), centralized unit-user plane (CU-UP).

Exemplarily, the core network device is any one of the following: a location management function (LMF) network element, a network slice selection function (NSSF), an authentication server function (AUSF), a unified data management (UDM), an access and mobility management function (AMF), a session management function (SMF), a policy control function (PCF), a user plane function (UPF), a sensing function (SF), a network data analytics function (NWDAF) network element.

In embodiments of the present disclosure, there is no limitation on the model mentioned above. For example, the model may be an AI model, for example, any of the AI models mentioned above, or a new model proposed by future technologies. For another example, the model may be a machine learning (ML) model.

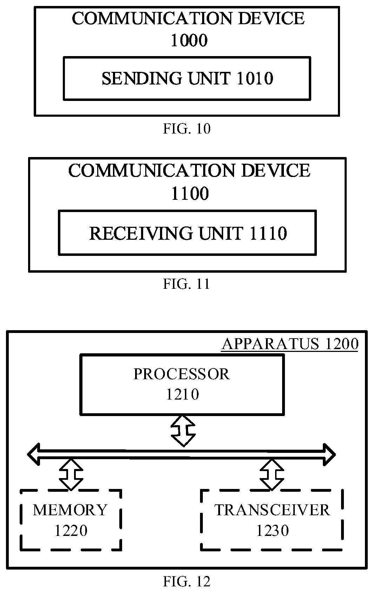

The method embodiments of the present disclosure are described in detail above with reference to FIG. 1 to FIG. 9. The apparatus embodiments of the present disclosure are described in detail below with reference to FIG. 10 to FIG. 12. It can be understood that the descriptions of the method embodiments correspond to the descriptions of the apparatus embodiments. Therefore, reference may be made to the foregoing method embodiments for parts not described in detail.

FIG. 10 is a schematic diagram of a communication device according to an embodiment of the present disclosure. The communication device 1000 illustrated in FIG. 10 is a first device. The communication device 1000 includes a sending unit 1010.

The sending unit 1010 is configured to send first information to a second device, the first information being associated with a database, model data stored in the database being used for model inference and/or model training.

In some implementations, the first information is used to request to invoke first model data from the database, and the first model data is used by a model for model inference and/or model training.

In some implementations, the first information includes one or more of the following: a model identifier of the model; an index identifier for querying the first model data; part or all of input data of the model; and time that the model uses the first model data.

In some implementations, the first information includes the index identifier, and input data corresponding to the first model data queried based on the index identifier matches the input data of the model.

In some implementations, the communication device further includes a first receiving unit. The first receiving unit is configured to receive response information of the first information sent by the second device, the response information indicating whether the first model data is searched out in the database.

In some implementations, the response information carries the first model data in response to the first model data being searched out in the database.

In some implementations, the first information is used to request to update the first model data in the database to second model data.

In some implementations, the database stores the first model data and the second model data.

In some implementations, the second model data is one of multiple model data. The multiple model data are obtained by a first model in the first device performing multiple times of model inference; and/or the multiple model data are obtained by the first device performing model inference based on multiple models respectively.

In some implementations, triggering of update of the first model data includes one or more of the following: periodic triggering; event-based triggering; triggering based on a model inference process; triggering based on a model training process; and triggering based on third information, the third information being used for requesting the first device to perform model training based on the first model data to update the first model data.

In some implementations, the update of the first model data is triggered based on an event, and the event includes one or more of: remaining storage space in the first device for storing model data is less than a first threshold; and a data volume of the model data stored in the first device is greater than a second threshold.

In some implementations, the first model data stored in the database is used for the model training. The sending unit is configured to send the first information to the second device in response to the model training being completed, the first information indicating to delete the first model data.

In some implementations, the communication device further includes a second receiving unit. The second receiving unit is configured to receive response information of the first information sent by the second device, the response information indicating whether the first model data is released.

In some implementations, the sending unit is configured to send fourth information to the second device before sending the first information to the second device, the fourth information being used to request the first model data in the database.

In some implementations, triggering of transmission of the fourth information includes on one of the following: periodic triggering; and triggering based on fifth information, the fifth information indicating that the first device is to obtain the first model data.

In some implementations, the fourth information is triggered based on the fifth information, and the fifth information indicates that the first device is to obtain the first model data by indicating that the first device is to perform model training based on the first model data.

In some implementations, the fifth information is triggered based on an event, and the event includes remaining storage space of the database being less than a threshold.

In some implementations, the first information indicates the first device to refuse to obtain first model data from the database, and the communication device further includes a third receiving unit. The third receiving unit is configured to receive sixth information from the second device, the six information indicating that the first device is to obtain the first model data.

FIG. 11 is a schematic diagram of a communication device according to an embodiment of the present disclosure. The communication device 1100 illustrated in FIG. 11 is a second device, and the communication device 1100 includes a receiving unit 1110.

The sending unit 1110 is configured to first information to a second device, the first information being associated with a database, model data stored in the database being used for model inference and/or model training.

In some implementations, the first information is used to request to invoke first model data from the database, and the first model data is used by a model for model inference and/or model training.

In some implementations, the first information includes one or more of the following: a model identifier of the model; an index identifier for querying the first model data; part or all of input data of the model; and time that the model uses the first model data.

In some implementations, the first information includes the index identifier, and input data corresponding to the first model data queried based on the index identifier matches the input data of the model.

In some implementations, the communication device further includes a first receiving unit. The first receiving unit is configured to receive response information of the first information sent by the second device, the response information indicating whether the first model data is searched out in the database.

In some implementations, the response information carries the first model data in response to the first model data being searched out in the database.

In some implementations, the first information is used to request to update the first model data in the database to second model data.

In some implementations, the database stores the first model data and the second model data.

In some implementations, the second model data is one of multiple model data. The multiple model data are obtained by a first model in the first device performing multiple times of model inference; and/or the multiple model data are obtained by the first device performing model inference based on multiple models respectively.

In some implementations, triggering of update of the first model data includes one or more of the following: periodic triggering; event-based triggering; triggering based on a model inference process; triggering based on a model training process; and triggering based on third information, the third information being used for requesting the first device to perform model training based on the first model data to update the first model data.

In some implementations, the update of the first model data is triggered based on an event, and the event includes one or more of: remaining storage space in the first device for storing model data is less than a first threshold; and a data volume of the model data stored in the first device is greater than a second threshold.

In some implementations, the first model data stored in the database is used for the model training; and the sending unit is configured to send the first information to the second device in response to the model training being completed, the first information indicating to delete the first model data.

In some implementations, the communication device further includes a second receiving unit. The second receiving unit is configured to receive response information of the first information sent by the second device, the response information indicating whether the first model data is released.

In some implementations, the sending unit is configured to send fourth information to the second device before sending the first information to the second device, the fourth information being used to request the first model data in the database.

In some implementations, triggering of transmission of the fourth information includes on one of the following: periodic triggering; and triggering based on fifth information, the fifth information indicating that the first device is to obtain the first model data.

In some implementations, the fourth information is triggered based on the fifth information, and the fifth information indicates that the first device is to obtain the first model data by indicating that the first device is to perform model training based on the first model data.

In some implementations, the fifth information is triggered based on an event, and the event includes remaining storage space of the database being less than a threshold.

In some implementations, the first information indicates the first device to refuse to obtain first model data from the database, and the communication device further includes a third receiving unit. The third receiving unit is configured to receive sixth information from the second device, the six information indicating that the first device is to obtain the first model data.

In an optional embodiment, the sending unit 1010 may be a transceiver 1230. The communication device 1000 may further include a transceiver 1230 and a memory 1220, as specifically illustrated in FIG. 12.

In an optional embodiment, the receiving unit 1110 may be a transceiver 1230. The communication device 1100 may further include a transceiver 1230 and a memory 1220, as specifically illustrated in FIG. 12.

FIG. 12 is a schematic structural diagram of a communication apparatus according to an embodiment of the present disclosure. A dashed line in FIG. 12 indicates that the unit or module is optional. The apparatus 1200 may be configured to implement the method described in the foregoing method embodiments. The apparatus 1200 may be a chip, a terminal device, or a network device.

The apparatus 1200 may include one or more processors 1210. The processor 1210 may support the apparatus 1200 in implementing the method described in the foregoing method embodiments. The processor 1210 may be a general-purpose processor or a dedicated processor. For example, the processor may be a central processing unit (CPU). Alternatively, the processor may also be another general-purpose processor, a digital signal processor (DSP), an application specific integrated circuit (ASIC), a field programmable gate array (FPGA) or other programmable logic devices, a discrete gate or transistor logic device, a discrete hardware component, or the like. A general-purpose processor may be a microprocessor, or the processor may also be any conventional processor, or the like.

The apparatus 1200 may further include one or more memories 1220. The memory 1220 is configured to store a program which, when executed by the processor 1210, causes the processor 1210 to execute the method described in the foregoing method embodiments. The memory 1220 may be independent of the processor 1210 or integrated in the processor 1210.

The apparatus 1200 may further include a transceiver 1230. The processor 1210 may communicate with other devices or chips via the transceiver 1230. For example, the processor 1210 may transmit and receive data to and from other devices or chips via the transceiver 1230.

Embodiments of the present disclosure further provide a computer-readable storage medium. The computer-readable storage medium is configured to store a program. The computer-readable storage medium may be applied to a terminal or a network device provided in embodiments of the present disclosure, and the program enables a computer to execute the method executed by the terminal or the network device in embodiments of the present disclosure.

Embodiments of the present disclosure further provide a computer program product. The computer program product includes a program. The computer program product may be applied to a terminal or a network device provided in embodiments of the present disclosure, and the program enables a computer to execute the method executed by the terminal or the network device in embodiments of the present disclosure.

Embodiments of the present disclosure further provide a computer program. The computer program may be applied to a terminal or a network device provided in embodiments of the present disclosure, and the computer program enables a computer to execute the method executed by the terminal or the network device in embodiments of the present disclosure.

It can be understood that, in the present disclosure, the terms "system" and "network" may be used interchangeably. In addition, the terms used in the present disclosure are merely used to explain specific embodiments of the present disclosure, and are not intended to limit the present disclosure. The terms "first", "second", "third", "fourth", and the like in the specification, claims, and accompanying drawings of the present disclosure are used to distinguish different objects, and are not used to describe a specific order. Moreover, the terms "include", "have", and any variants thereof are intended to cover non-exclusive inclusion.

In embodiments of the present disclosure, "indicate" mentioned may indicate directly, indicate indirectly, or represent an association relationship. For example, A indicates B may represent that A directly indicates B, for example, B obtains through A; may also represent that A indirectly indicates B, for example, A indicates C, and B obtains through C; and may also represent that there is an association relationship between A and B.

In embodiments of the present disclosure, "B corresponding to A" means that B is associated with A, and B may be determined according to A. However, it can also be understood that determining B according to A does not mean determining B merely according to A, and B may also be determined according to A and/or other information.

In embodiments of the present disclosure, the term "corresponding" may represent a direct correspondence or an indirect correspondence between two parties, may also represent an association relationship between two parties, and may also represent a relationship such as indicate and indicated, configure and configured, or the like.

In embodiments of the present disclosure, "predefined" or "preconfigured" may be implemented by pre-saving corresponding codes, tables, or other manners that may be used to indicate related information in a device (for example, including a terminal device and a network device). The present disclosure does not limit a specific implementation thereof. For example, "predefined" may mean defined in a protocol.

In embodiments of the present disclosure, the "protocol" may refer to a standard protocol in the communication field, for example, may include an LTE protocol, an NR protocol, and a related protocol applied to a future communication system, which is not limited in the present disclosure.

The term "and/or" in embodiments of the present disclosure merely describes an association relationship between associated objects and indicates that three relationships may exist. For example, A and/or B may represent the following three cases: only A exists, both A and B exist, and only B exists. In addition, the character "/" herein generally indicates that the associated objects before and after are in an "or" relationship.

In various embodiments of the present disclosure, sequence numbers of the foregoing processes do not mean an execution order. The execution order of the processes can be determined according to functions and internal logic thereof, and should not constitute any limitation on an implementation process of embodiments of the present disclosure.

In several embodiments provided in the present disclosure, it can be understood that the disclosed system, apparatus, and method may be implemented in other manners. For example, the apparatus embodiments described above are merely exemplary. For example, division into units is merely logical function division, and there may be another division manner during actual implementation. For example, multiple units or components may be combined or integrated into another system, or some features may be ignored or not performed. In addition, the mutual coupling, or direct coupling, or communication connection shown or discussed may be an indirect coupling or communication connection via some interfaces, apparatuses, or units, and may be in an electrical, mechanical, or other form.

Units described as separate components may or may not be physically separated, and components shown as units may or may not be physical units, may be located in one place, or may be distributed to multiple network units. Some or all of the units may be selected according to actual requirements to achieve objectives of the solutions of embodiments.

In addition, functional units in embodiments of the present disclosure may be integrated into one processing unit, or each of the units may exist alone physically, or two or more units may be integrated into one unit.

In the foregoing embodiments, the embodiments may be implemented entirely or partially by software, hardware, firmware, or any combination thereof. When implemented by using software, the embodiments may be implemented entirely or partially in a form of a computer program product. The computer program product includes one or more computer instructions. When the computer program instructions are loaded and executed on a computer, the processes or functions according to the embodiments of the present disclosure are generated entirely or partially. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, a computer, a server, or a data center to another website, a computer, a server, or a data center in a wired (e.g., coaxial cable, optical fiber, digital subscriber line (DSL)) or wireless (e.g., infrared, wireless, microwave, etc.) manner. The computer-readable storage medium may be any available medium that can be read by a computer or a data storage device such as a server or a data center that includes one or more available media integrated therein. The available medium may be a magnetic medium (for example, a floppy disk, a hard disk, or a magnetic tape), an optical medium (e.g., a digital video disc (DVD)), a semiconductor medium (e.g., a solid state disk (SSD)), or the like.

The foregoing descriptions are merely specific implementations of the present disclosure, but the protection scope of the present disclosure is not limited thereto. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A method for model data management, comprising:
sending, by a first device, first information to a second device, the first information being associated with a database, model data stored in the database being used for model inference and/or model training.

2. The method of claim 1, wherein the first information is used to request to invoke first model data from the database, and the first model data is used by a model for model inference and/or model training.

3. The method of claim 2, wherein the first information comprises one or more of the following:
a model identifier of the model;
an index identifier for querying the first model data;
part or all of input data of the model; and
time that the model uses the first model data.

4. The method of claim 3, wherein the first information comprises the index identifier, and input data corresponding to the first model data queried based on the index identifier matches the input data of the model.

5. The method of any one of claims 2 to 4, further comprising:
receiving, by the first device, response information of the first information sent by the second device, the response information indicating whether the first model data is searched out in the database.

6. The method of claim 5, wherein the response information carries the first model data in response to the first model data being searched out in the database.

7. The method of claim 1, wherein the first information is used to request to update the first model data in the database to second model data.

8. The method of claim 7, wherein the database stores the first model data and the second model data.

9. The method of claim 7 or 8, wherein the second model data is one of a plurality of model data; and
the plurality of model data are obtained by a first model in the first device performing a plurality of times of model inference; and/or
the plurality of model data are obtained by the first device performing model inference based on a plurality of models respectively.

10. The method of any one of claims 7 to 9, wherein triggering of update of the first model data comprises one or more of the following:
periodic triggering;
event-based triggering;
triggering based on a model inference process;
triggering based on a model training process; and
triggering based on third information, the third information being used for requesting the first device to perform model training based on the first model data to update the first model data.

11. The method of claim 10, wherein the update of the first model data is triggered based on an event, and the event comprises one or more of:
remaining storage space in the first device for storing model data is less than a first threshold; and
a data volume of the model data stored in the first device is greater than a second threshold.

12. The method of claim 1, wherein the first model data stored in the database is used for the model training, and sending, by the first device, the first information to the second device comprises:
in response to the model training being completed, sending, by the first device, the first information to the second device, the first information indicating to delete the first model data.

13. The method of claim 12, further comprising:
receiving, by the first device, response information of the first information sent by the second device, the response information indicating whether the first model data is released.

14. The method of claim 12 or 13, wherein before sending, by the first device, the first information to the second device, the method further comprises:
sending, by the first device, fourth information to the second device, the fourth information being used to request the first model data in the database.

15. The method of claim 14, wherein triggering of transmission of the fourth information comprises one of the following:
periodic triggering; and
triggering based on fifth information, the fifth information indicating that the first device is to obtain the first model data.

16. The method of claim 15, wherein the fourth information is triggered based on the fifth information, and the fifth information indicates that the first device is to obtain the first model data by indicating that the first device is to perform model training based on the first model data.

17. The method of claim 15 or 16, wherein the fifth information is triggered based on an event, and the event comprises remaining storage space of the database being less than a threshold.

18. The method of claim 1, wherein the first information indicates that the first device is to refuse to obtain first model data from the database, and before sending, by the first device, the first information to the second device, the method further comprises:
receiving, by the first device, sixth information from the second device, the six information indicating that the first device is to obtain the first model data.

19. A method for model data management, comprising:
receiving, by a second device, first information sent by a first device, the first information being associated with a database, model data stored in the database being used for model inference and/or model training.

20. The method of claim 19, wherein the first information is used to request to invoke first model data from the database, and the first model data is used by a model for model inference and/or model training.

21. The method of claim 20, wherein the first information comprises one or more of the following:
a model identifier of the model;
an index identifier for querying the first model data;
part or all of input data of the model; and
time that the model uses the first model data.

22. The method of claim 21, wherein the first information comprises the index identifier, and input data corresponding to the first model data queried based on the index identifier matches the input data of the model.

23. The method of any one of claims 20 to 22, further comprising:
sending, by the second device, response information of the first information to the first device, the response information indicating whether the first model data is searched out in the database.

24. The method of claim 23, wherein the response information carries the first model data in response to the first model data being searched out in the database.

25. The method of claim 19, wherein the first information is used to request to update the first model data in the database to second model data.

26. The method of claim 25, wherein the database stores the first model data and the second model data.

27. The method of claim 25 or 26, wherein the second model data is one of a plurality of model data; and
the plurality of model data are obtained by a first model in the first device performing a plurality of times of model inference; and/or
the plurality of model data are obtained by the first device performing model inference based on a plurality of models respectively.

28. The method of any one of claims 25 to 27, wherein triggering of update of the first model data comprises one or more of the following:
periodic triggering;
event-based triggering;
triggering based on a model inference process;
triggering based on a model training process; and
triggering based on third information, the third information being used for requesting the first device to perform model training based on the first model data to update the first model data.

29. The method of claim 28, wherein the updating of the first model data is triggered based on an event, and the event comprises one or more of:
remaining storage space in the first device for storing model data is less than a first threshold; and
a data volume of the model data stored in the first device is greater than a second threshold.

30. The method of claim 19, wherein the first model data stored in the database is used for the model training, sending, by the first device, the first information to the second device comprises:
in response to the model training being completed, receiving, by the second device, the first information sent by the first device, the first information indicating to delete the first model data.

31. The method of claim 30, further comprising:
sending, by the second device, response information of the first information to the first device, the response information indicating whether the first model data is released.

32. The method of claim 30 or 31, wherein before sending, by the first device, the first information to the second device, the method further comprises:
receiving, by the second device, fourth information sent by the first device, the fourth information being used to request the first model data in the database.

33. The method of claim 32, wherein triggering of transmission of the fourth information comprises one of the following:
periodic triggering; and
triggering based on fifth information, the fifth information indicating that the first device is to obtain the first model data.

34. The method of claim 33, wherein the fourth information is triggered based on the fifth information, and the fifth information indicates that the first device is to obtain the first model data by indicating that the first device is to perform model training based on the first model data.

35. The method of claim 33 or 34, wherein the fifth information is triggered based on an event, and the event comprises remaining storage space of the database being less than a threshold.

36. The method of claim 19, wherein the first information indicates that the first device is to refuse to obtain first model data from the database, and before sending, by the first device, the first information to the second device, the method further comprises:
sending, by the second device, sixth information to the first device, the six information indicating that the first device is to obtain the first model data.

37. A communication device, wherein the communication device is a first device and the communication device comprises:
a sending unit configured to send first information to a second device, the first information being associated with a database, model data stored in the database being used for model inference and/or model training.

38. The communication device of claim 37, wherein the first information is used to request to invoke first model data from the database, and the first model data is used by a model for model inference and/or model training.

39. The communication device of claim 38, wherein the first information comprises one or more of the following:
a model identifier of the model;
an index identifier for querying the first model data;
part or all of input data of the model; and
time that the model uses the first model data.

40. The communication device of claim 39, wherein the first information comprises the index identifier, and input data corresponding to the first model data queried based on the index identifier matches the input data of the model.

41. The communication device of any one of claims 38 to 40, further comprising:
a first receiving unit configured to receive response information of the first information sent by the second device, the response information indicating whether the first model data is searched out in the database.

42. The communication device of claim 41, wherein the response information carries the first model data in response to the first model data being searched out in the database.

43. The communication device of claim 37, wherein the first information is used to request to update the first model data in the database to second model data.

44. The communication device of claim 43, wherein the database stores the first model data and the second model data.

45. The communication device of claim 43 or 44, wherein the second model data is one of a plurality of model data; and
the plurality of model data are obtained by a first model in the first device performing a plurality of times of model inference; and/or
the plurality of model data are obtained by the first device performing model inference based on a plurality of models respectively.

46. The communication device of any one of claims 43 to 45, wherein triggering of update of the first model data comprises one or more of the following:
periodic triggering;
event-based triggering;
triggering based on a model inference process;
triggering based on a model training process; and
triggering based on third information, the third information being used for requesting the first device to perform model training based on the first model data to update the first model data.

47. The communication device of claim 46, wherein the update of the first model data is triggered based on an event, and the event comprises one or more of:
remaining storage space in the first device for storing model data is less than a first threshold; and
a data volume of the model data stored in the first device is greater than a second threshold.

48. The communication device of claim 37, wherein the first model data stored in the database is used for the model training; and
the sending unit is configured to send the first information to the second device in response to the model training being completed, the first information indicating to delete the first model data.

49. The communication device of claim 48, further comprising:
a second receiving unit configured to receive response information of the first information sent by the second device, the response information indicating whether the first model data is released.

50. The communication device of claim 48 or 49, wherein the sending unit is configured to send fourth information to the second device before sending the first information to the second device, the fourth information being used to request the first model data in the database.

51. The communication device of claim 50, wherein triggering of transmission of the fourth information comprises one of the following:
periodic triggering; and
triggering based on fifth information, the fifth information indicating that the first device is to obtain the first model data.

52. The communication device of claim 51, wherein the fourth information is triggered based on the fifth information, and the fifth information indicates that the first device is to obtain the first model data by indicating that the first device is to perform model training based on the first model data.

53. The communication device of claim 51 or 52, wherein the fifth information is triggered based on an event, and the event comprises remaining storage space of the database being less than a threshold.

54. The communication device of claim 37, wherein the first information indicates the first device to refuse to obtain first model data from the database, and the communication device further comprises:
a third receiving unit configured to receive sixth information from the second device, the six information indicating that the first device is to obtain the first model data.

55. A communication device, wherein the communication device is a second device and the communication device comprises:
a receiving unit configured to receive first information sent by a first device, the first information being associated with a database, model data stored in the database being used for model inference and/or model training.

56. The communication device of claim 55, wherein the first information is used to request to invoke first model data from the database, and the first model data is used by a model for model inference and/or model training.

57. The communication device of claim 56, wherein the first information comprises one or more of the following:
a model identifier of the model;
an index identifier for querying the first model data;
part or all of input data of the model; and
time that the model uses the first model data.

58. The communication device of claim 57, wherein the first information comprises the index identifier, and input data corresponding to the first model data queried based on the index identifier matches the input data of the model.

59. The communication device of any one of claims 56 to 58, further comprising:
a first sending unit configured to send response information of the first information to the first device, the response information indicating whether the first model data is searched out in the database.

60. The communication device of claim 59, wherein the response information carries the first model data in response to the first model data being searched out in the database.

61. The communication device of claim 55, wherein the first information is used to request to update the first model data in the database to second model data, the second model data being used for the model to perform model inference and/or model training.

62. The communication device of claim 61, wherein the database stores the first model data and the second model data.

63. The communication device of claim 61 or 62, wherein the second model data is one of a plurality of model data; and
the plurality of model data are obtained by a first model in the first device performing a plurality of times of model inference; and/or
the plurality of model data are obtained by the first device performing model inference based on a plurality of models respectively.

64. The communication device of any one of claims 61 to 63, wherein triggering of update of the first model data comprises one or more of the following:
periodic triggering;
event-based triggering;
triggering based on a model inference process;
triggering based on a model training process; and
triggering based on third information, the third information being used for requesting the first device to perform model training based on the first model data to update the first model data.

65. The communication device of claim 64, wherein the updating of the first model data is triggered based on an event, and the event comprises one or more of:
remaining storage space in the first device for storing model data is less than a first threshold; and
a data volume of the model data stored in the first device is greater than a second threshold.

66. The communication device of claim 55, wherein the first model data stored in the database is used for the model training, and the receiving unit is configured to receive the first information sent by the first device in response to the model training being completed, the first information indicating to delete the first model data.

67. The communication device of claim 66, further comprising:
a second sending unit configured to send response information of the first information to the first device, the response information indicating whether the first model data is released.

68. The communication device of claim 66 or 67, wherein the receiving unit is further configured to receive fourth information sent by the first device, the fourth information being used to request the first model data in the database.

69. The communication device of claim 68, wherein triggering of transmission of the fourth information comprises one of the following:
periodic triggering; and
triggering based on fifth information, the fifth information indicating that the first device is to obtain the first model data.

70. The communication device of claim 69, wherein the fourth information is triggered based on the fifth information, and the fifth information indicates that the first device is to obtain the first model data by indicating that the first device is to perform model training based on the first model data.

71. The communication device of claim 69 or 70, wherein the fifth information is triggered based on an event, and the event comprises remaining storage space of the database being less than a threshold.

72. The communication device of claim 55, wherein the first information indicates that the first device is to refuse to obtain first model data from the database, and the communication device further comprises:
a third sending unit configured to send sixth information to the first device, the six information indicating that the first device is to obtain the first model data.

73. A communication device comprising a transceiver, a memory, and a processor, wherein the memory is configured to store a program, the processor is configured to invoke the program in the memory and control the transceiver to receive or send a signal, to cause the communication device to perform the method of any one of claims 1 to 36.

74. A device comprising a processor, wherein the processor is configured to invoke a program from a memory to cause the device to perform the method of any one of claims 1 to 36.

75. A chip comprising a processor, wherein the processor is configured to invoke a program from a memory to cause a device equipped with the chip to perform the method of any one of claims 1 to 36.

76. A computer-readable storage medium storing a program thereon, wherein the program is configured to cause a computer to perform the method of any one of claims 1 to 36.

77. A computer program product comprising a program, wherein the program is configured to cause a computer to perform the method of any one of claims 1 to 36.

78. A computer program causing a computer to perform the method of any one of claims 1 to 36.
